**Europäisches Patentamt**

**European Patent Office**

**Office européen des brevets**

(11) Publication number: **0 259 090**
**A2**

# (12) EUROPEAN PATENT APPLICATION

(21) Application number: **87307535.2**

(22) Date of filing: **26.08.87**

(51) Int. Cl.⁴: **G01N 1/28**

(30) Priority: **28.08.86 GB 8620862**

(43) Date of publication of application:
**09.03.88 Bulletin 88/10**

(84) Designated Contracting States:
**AT BE CH DE ES FR GB GR IT LI LU NL SE**

(71) Applicant: **HEXLAND LIMITED**
**1 Serjeant's Inn**
**LONDON EC4Y 1JD(GB)**

(72) Inventor: **Bald, William Balfour**
**38 Wood Street**
**Woburn Sands Buckinghamshire MK17**
**8PJ(GB)**

(74) Representative: **Jukes, Herbert Lewis**
**Swann, Elt & Company 31 Beaumont Street**
**Oxford OX1 2NP(GB)**

(54) **Cooling of materials for electron microscopy.**

(57) Apparatus for cooling (e.g. freezing) material (especially a biological specimen), comprises:
carrier means (21) for carrying the material;
a pressurisable first vessel portion (1) for containing the carrier means and said carried material;
a pressurisable second vessel portion (2) for coupling to the first vessel portion, for receiving the carrier means projected from the first vessel portion into the second vessel portion, with said carried material, the second vessel portion being able to contain liquid coolant for receiving the projected carrier means. The resultant material can be examined by microscopy, especially electron microscopy.

FIG.1.

## Cooling of materials for electron microscopy

Preparation of a biological specimen for examination by electron microscopy can comprise rapidly freezing the specimen, to capture ·instantaneously the in vivo structure of cells of the specimen. A known method of freezing comprises plunging a specimen of biological material into a liquid coolant maintained at a temperature near its melting point at atmospheric pressure. Generally accepted liquid coolants for that purpose are liquid ethane or liquid propane. Cryogenic liquids (inorganic or organic), e.g. comprising helium, hydrogen, or nitrogen, are known to be less efficient than liquid ethane or liquid propane for cooling biological material efficiently, because vapour forms around the plunged material and can form a thermally insulating barrier layer. However, it has been found that the present invention can prevent or reduce the problems of vapour formation and thermally insulating barrier layers.

A first aspect of the invention provides apparatus for cooling (e.g. freezing) material (especially a biological specimen), comprising:
carrier means for carrying the material;
a pressurisable first vessel portion for containing the carrier means and said carried material;
a pressurisable second vessel portion for coupling to the first vessel portion, for receiving the carrier means projected from the first vessel portion into the second vessel portion, with said carried material, the second vessel portion being able to contain liquid coolant for receiving the projected carrier means.
Thus, said carried material will be cooled or further cooled by liquid coolant.

A second aspect of the invention provides apparatus for cooling (e.g. freezing) material (especially a biological specimen), comprising:
carrier means for carrying the material;
projectile means for releasably containing the carrier means and said carried material, the carrier means and said carried material being protected by the projectile means;
a pressurisable first vessel portion for containing the projectile means when containing the carrier means and said carried material;
a pressurisable second vessel portion for coupling to the first vessel portion, for receiving the projectile means projected from the first vessel portion into the second vessel portion, with the carrier means and said carried material, the second vessel portion being able to contain liquid coolant for receiving the projected projectile means and the carrier means released from the projectile means. Thus, said carried material will be cooled or further cooled by liquid coolant.

A third aspect of the invention provides a method for cooling (e.g. freezing) material (especially a biological specimen), comprising:
utilising apparatus of the first or second aspect of the invention, to provide said cooling.

A fourth aspect of the invention provides a method of microscopy (especially electron microscopy), comprising examining cooled (e.g. at least partly frozen) material prepared by the method of the third aspect of the invention.

A fifth aspect of the invention provides said carrier means for the first or second aspect of the invention.

A sixth aspect of the invention provides said projectile means for the second aspect of the invention.

The present invention can be embodied in any suitable manner. Apparatus of the first or second aspect of the invention can be at least partly enclosed in a housing, e.g. a metal casing.

The carrier means can comprise a shuttle for holding tweezers for gripping the material (especially a biological specimen).

The projectile means can comprise a projectile (e.g. a dart) comprising pivoted shrouds, such that when the shrouds are pivoted apart the projectile can be charged with the shuttle and the material, e.g. when the material is gripped by tweezers, or the charged shuttle can be discharged from the projectile. The shrouds can be adapted to allow their pivoting apart to be produced by inertia resulting from impact of the projectile in the second vessel portion, whereby the shuttle can be discharged to enable the required cooling or further cooling of the material. The second vessel portion can comprise stop means for enabling that impact.

The apparatus of the first or second aspect of the invention can comprise impeller means for projecting the carrier means, or the projectile means, for said first vessel portion. The impeller means can comprise compression spring means; and release means for releasing compression of the spring means so as to enable said projecting. The spring means can be compressed in any suitable manner, e.g. by handle means. The release means can be trigger actuated. The manner of projecting the carrier means, or the projectile means, can be controlled when adjustable impeller means is provided, e.g. to control the velocities of the carrier means or the projectile means.

The first vessel portion can be tubular or any other suitable configuration or shape. The first vessel portion can be charged in any suitable manner with the carrier means or the projectile means containing the carrier means. For example, the carrier means or projectile means can be inserted through that part of the first vessel portion which will communicate with the second vessel portion.

The second vessel portion can be tubular or any other suitable configuration or shape. The second vessel portion can be disposed under the first vessel portion. The second vessel portion can comprise a vacuum jacket for providing at least a portion of thermal insulation for the liquid coolant. The second vessel portion can comprise at least one connection means for receiving inert gas (e.g. nitrogen) for pressurising the second vessel portion and/or the first vessel portion. The second vessel portion can comprise at least one pressure relief valve means for gas pressure release in the second vessel portion and/or the first vessel portion.

The apparatus of the invention can comprise coupling means for releasably coupling the first and second vessel portions together. Apparatus of the invention can minimise morphological deterioration of a biological specimen before it has completed its cooling, especially when said coupling means comprises a high pressure quick release valve.

The apparatus of the invention can comprise access valve means for allowing or preventing the passage of the carrier means or projectile means containing the carrier means, from the first vessel portion into the second vessel portion. The access valve means can be utilised for additional purpose-(s), e.g. in pressurising or depressurising the first and/or second vessel portions. The access valve means can be a high pressure ball valve or a gate valve.

Liquid coolant used in the invention can be any suitable liquid coolant. The liquid coolant can be a cryogenic liquid, e.g. comprising hydrogen, helium, or nitrogen. The apparatus of the invention can enable liquid coolant (especially nitrogen) to be maintained at temperatures near to or below its boiling point at pressures near its critical pressure. Preferred pressures of gas in the first and second vessel portions are in the range 25 to 40 bar. Liquid nitrogen can be maintained near its melting point of 63.1 K.

The apparatus may comprise any suitable retrieval means for retrieving at least the cooled material from the second vessel portion 2, see e.g. the retrieval device 43 mentioned later below.

In the accompanying drawings, which are given by way of schematic example of the invention:

Fig. 1 shows a sectional assembly of upper and lower vessel portions of a first embodiment of apparatus.

Fig. 2 is a sectional elevation of the upper vessel portion of Fig. 1.

Fig. 3 shows a sectional assembly of upper and lower vessel portions of a second embodiment of apparatus.

Fig. 4 is a sectional elevation of the upper vessel portion of Fig. 3.

Fig. 5 shows a dart projectile, for the apparatus of Fig. 3 or 4.

Fig. 6 shows a cocking device for an impeller spring in the apparatus of Figs. 1 and 2 or 3 to 5.

Fig. 7 shows a casing for apparatus of Figs. 1 and 2 or 3 to 5.

Fig. 8 shows a retrieval device for a shuttle utilised in the apparatus of Figs. 1 and 2 or 3 to 5.

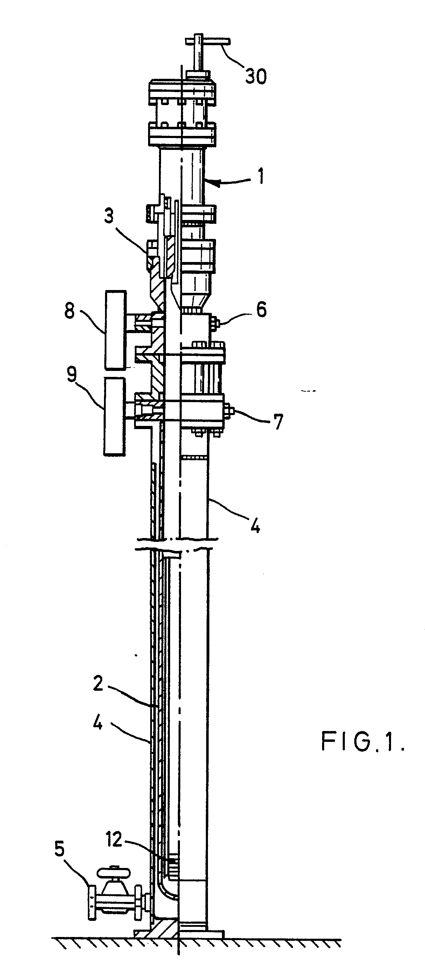

In Fig. 1, an upper tubular vessel portion 1 is coupled to a lower tubular vessel portion 2 by a high pressure quick release coupling 3. Lower vessel portion 2 is surrounded by a thermally insulating vacuum jacket 4 evacuable via a vacuum valve 5. Lower vessel portion 2 has inlet connection 7 for pressurising the vessel portions 1, 2 with inert gas (especially nitrogen). Preferably, the pressurisation is in the range 25 to 40 bar. Lower vessel portion 2 has excess pressure valves 8, 9 for preventing excess pressurisation in the upper and lower vessel portions 1, 2.

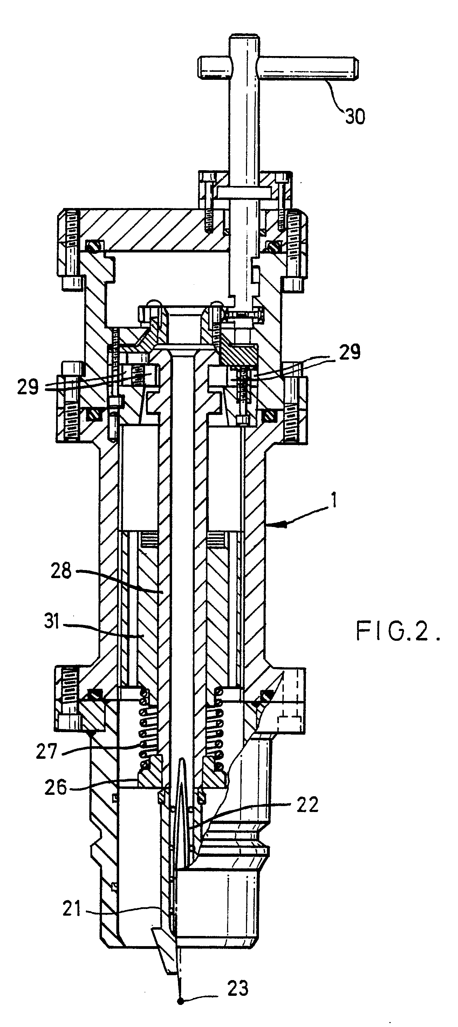

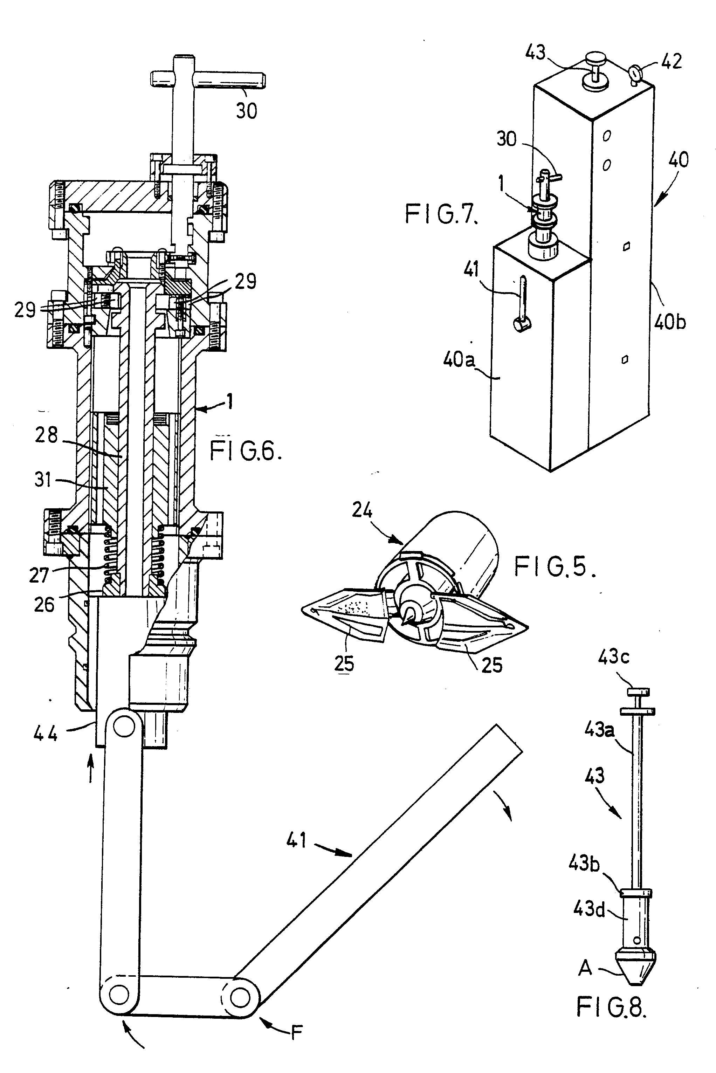

In Fig. 2, a shuttle 21 carries tweezers 22 holding a biological specimen 23. Shuttle 21 is preloaded into upper vessel portion 1 by pressing the rear end of shuttle 21 against a thrust member 26 abutting compression spring 27, whose resultant compression is releasable by release mechanism comprising a plunger 28, latch 29, and hand trigger 30. Spring 27 is mounted on a bobbin 31 that abuts the rear of spring 27. Bobbin 31 is in screw threaded engagement with the upper vessel portion 1, such that the spring compression and release velocity of shuttle 21 can be varied by relocating bobbin 31. Spring 27 can be compressed by handle means, which can be part of or separate from the apparatus. Figs. 6, 7 show such a handle 41.

For freezing specimen 23, the lower vessel portion 2 is filled to the requisite level with e.g. liquid nitrogen via the lower half of the quick release coupling 3. The upper vessel portion 1 containing loaded shuttle 21 is coupled to the lower vessel portion 2 by the quick release coupling 3. The lower and upper vessel portions 1 and 2 are pressurised with e.g. gaseous nitrogen via inlet connection 7, excessive pressure being prevented by excess pressure valve 8 which enables appropriate relief. Shuttle 21 is projected into lower vessel portion 2 by actuating trigger 30, and plunges towards the bottom of lower vessel portion 2, to impact upon a spring damper 12 (Fig. 1) in lower vessel portion 2. After a suitable period allowing for thermal equilibrium of the specimen, to produce freezing of the specimen, the pressurisation in upper and lower vessel portion 1, 2 is released, the upper vessel portion 1 is then removed, and the shuttle, tweezers, and specimen removed from lower vessel portion 2 by a removeable retrieval device that will retain the specimen in liquid nitrogen. The removed frozen specimen is available for e.g. electron microscopy.

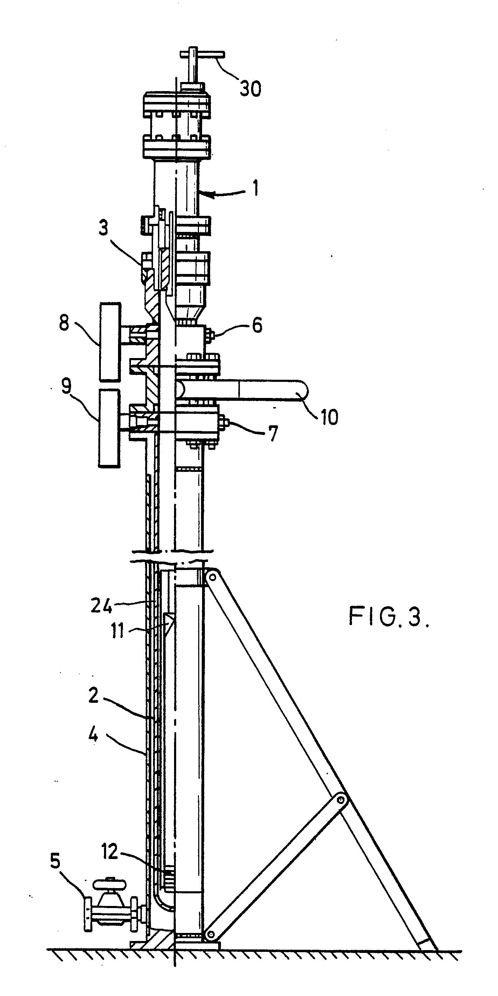

In Fig. 3, an upper tubular vessel portion 1 is coupled to a lower tubular vessel portion 2 by a high pressure quick release coupling 3. Lower vessel portion 2 is surrounded by a thermally insulating vacuum jacket 4 evacuable via a vacuum valve 5. Lower vessel portion 2 has inlet connections 6, 7 for pressurising the upper and/or lower vessel portions 1, 2 with inert gas (especially nitrogen). Preferably, the pressurisation(s) are in the range 25 to 40 bar. Lower vessel portion 2 has excess pressure valves 8, 9 for preventing excess pressurisation in the upper and lower vessel portions 1, 2. Lower vessel portion 2 includes an access valve 10 (e.g. a high pressure ball valve or gate valve) for controlling communication between the upper and lower vessel portions 1, 2.

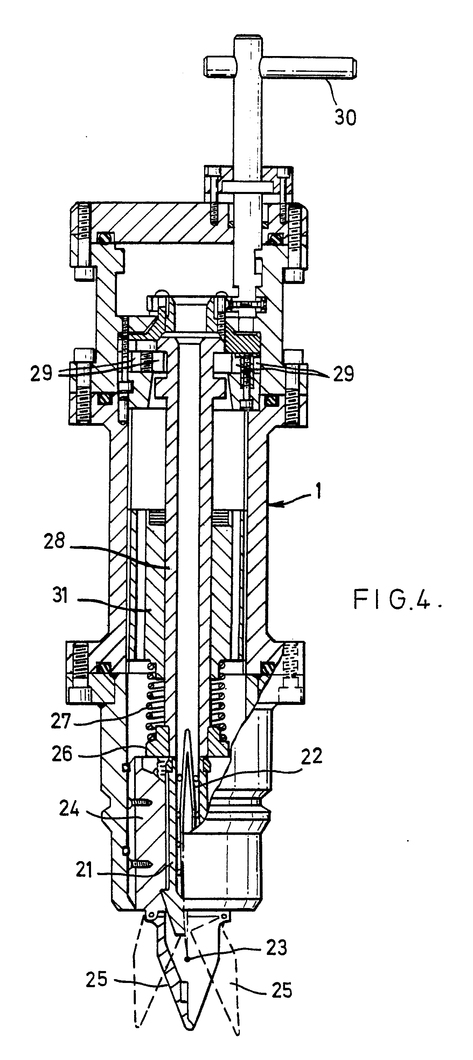

In Fig. 4, a shuttle 21 carries tweezers 22 holding a biological specimen 23. A dart 24 (Figs. 5, 6) contains shuttle 21, tweezers 22, and specimen 23. Dart 24 has pivoted shrouds 25 constituting the nose of the dart. When the shrouds are pivoted apart, the dart can be charged with shuttle 21, tweezers 22, and specimen 23. Dart 24 is preloaded into upper vessel portion 1 by pressing the rear end of dart 24 against a thrust member 26 abutting compression spring 27, whose resultant compression is releasable by release mechanism comprising a plunger 28, latch 29, and hand trigger 30. Spring 27 is mounted on a bobbin 31 which also abuts the rear of spring 27. Bobbin 31 is in screw threaded engagement with the upper vessel portion 1, such that the spring compression and release velocity of dart 24 can be varied by relocating bobbin 31. Spring 27 can be compressed by handle means, which can be part of or separate from the apparatus. Figs. 6, 7 show such a handle 41.

For freezing specimen 23, the lower vessel portion 2 is filled to the requisite level with e.g. liquid nitrogen via the lower half of the quick release coupling 3 with the access valve 10 open. Valve 10 is then closed, and the lower vessel portion 2 pressurised with e.g. gaseous nitrogen via inlet connection 7. If maximum cooling of the specimen is required, the initial liquid nitrogen temperature can be reduced to near its melting point temperature of 63 K by reducing its vapour pressure by using inlet connection 7 before the pressurisation. The upper vessel portion 1 containing loaded dart 24 is coupled to the lower vessel portion by the quick release coupling 3. The upper vessel portion 1 is then pressurised to the same pressure as the lower vessel portion 2, using gaseous nitrogen via inlet connection 6, excessive pressure in the upper vessel portion being prevented by excess pressure valve 8, which enables appropriate relief. Access valve 10 is then opened fully, and dart 24 projected into lower vessel portion 2 by actuating trigger 30. A stop 11 in lower vessel portion 2 is impacted upon by the plunging shrouds of dart 24, whereby inertia forces the shrouds to pivot apart to enable discharge of shuttle 21, tweezers 22, specimen 23, which thereby plunge towards the bottom of lower vessel portion 2 and impact upon a spring damper 12 in lower vessel portion 2. Stop 11 can be at the initial liquid coolant fill level or at any other suitable level. After a suitable period allowing for thermal equilibrium of the specimen, to produce freezing of the specimen, the pressurisation in upper and lower vessel portions 1, 2 is released, the upper vessel portion 1 is then removed, and shuttle 21, tweezers 22, and specimen 23 removed from lower vessel portion 2 by using a removeable retrieval device that will retain the specimen in liquid nitrogen. The removed frozen specimen is available for e.g. electron microscopy.

In Fig. 6, an example of removeable optional cocking means for compressing spring 27 (Figs. 2, 4) comprises a handle 41 (Figs. 6, 7) that is pivotally linked to a piston 44 for compressing spring 27. Piston 44 is removeably insertable into the upper vessel portion 1. The linkage of handle 41 comprises a fulcrum F that is a portion of casing portion 40a (Fig. 7). An abutment (not shown) is comprised by the apparatus so as to resist the reaction of operating handle 41.

In Fig. 7, a metal casing 40 comprises: casing portion 40a for upper vessel portion 1, and casing portion 40b for lower vessel portion 2. Upper vessel portion 1 is removed from casing portion 40a and then mounted on lower vessel portion 2. A pressure gauge 42 projects from the top of casing 40b, for indicating the absence or presence of the pressurisation. Figs. 7, 8 show an optional removeable retrieval device 43 for cooperating with lower vessel portion 2. Device 43 comprises: a removeable retrieval rod portion 43a, a coupling 43b actuated by a plunger button 43c on top of rod portion 43a, and a container portion 43d e.g. for being seated on top of damper spring 12 in the bottom region of the interior of lower vessel 2. Coupling 43b will releasably decouple container portion 43d from rod portion 43a so that the top of container portion 43d will be open to receive liquid coolant and the projected shuttle 21. After the receival of shuttle 21, the rod portion 43a is coupled to container portion 43d so that by lifting rod portion 43a the container portion 43d and its received liquid coolant and shuttle 21 can be removed from lower vessel portion 2. It is not essential for container portion 43d to be provided, because (as an alternative) the projected shuttle 21 can be received directly by the damper spring 12. In general, any suitable means can be used for retrieving the shuttle and cooled material, e.g. magnetic means or the container portion 43d.

Frozen specimens prepared by apparatus of the drawings can be utilised in any suitable manner, e.g. for examination by microscopy, especially electron microscopy. Such examination may be carried out in any suitable known manner.

The present invention includes equivalents and modifications of the disclosures contained in the above description of the invention and/or in the drawings.

## Claims

1. Apparatus for cooling (e.g. freezing) material (especially a biological specimen), characterised by:
carrier means (21) for carrying the material;
a pressurisable first vessel portion (1) for containing the carrier means and said carried material;
a pressurisable second vessel portion (2) for coupling to the first vessel portion, for receiving the carrier means projected from the first vessel portion into the second vessel portion, with said carried material, the second vessel portion being able to contain liquid coolant for receiving the projected carrier means.

2. Apparatus as claimed in claim 1, characterised by said carrier means comprises a shuttle (21) for holding tweezers (22) for gripping the material.

3. Apparatus as claimed in claim 1 or 2, characterised by projectile means (24) for releasably containing the carrier means and said carried material, the carrier means and said carried material being protected by the projectile means, the first vessel portion being for containing the projectile means when containing the carrier means and said carried material, the second vessel portion being for coupling to the first vessel portion, for receiving the projectile means projected from the first vessel portion, with the carrier means and said carried material, the second vessel portion being able to contain liquid coolant for receiving the projected projectile means and the carrier means released from the projectile means.

4. Apparatus as claimed in any one of claims 1 to 3, comprising impeller means (26 to 31) for projecting the carrier means, or the projectile means, from the first vessel portion.

5. Apparatus as claimed in claim 4, characterised by said impeller means comprises: spring means (27); and release means (28, 29, 30, 31) for releasing compression of the spring means so as to enable said projecting.

6. Apparatus as claimed in any one of claims 1 to 5, characterised by retrieval means (43) for retrieving at least the cooled material from the second vessel portion.

7. A method for cooling (e.g. freezing) material (especially a biological specimen), characterised by utilising apparatus of any one of claims 1 to 6, whereby vapour formation around the cooling material is prevented or reduced.

8. A method of microscopy (especially electron microscopy), characterised by examining cooled material as prepared by apparatus as claimed in any one of claims 1 to 6 or by a method as claimed in claim 7.

FIG.1.

0 259 090

FIG.2.

FIG.3.

FIG.4.

0 259 090

FIG.6.

FIG.7.

FIG.5.

FIG.8.